# EUROPÄISCHE PATENTANMELDUNG

(11) **EP 1 520 779 A2**
(43) Veröffentlichungstag der Anmeldung: **06.04.2005**
(21) Anmeldenummer: 04016897.3
(22) Anmeldetag: 17.07.2004
(51) Int. Cl.: B63B 39/06, F16C 17/02, F16C 33/20

(54) **Vorrichtung zur Schwenklagerung**

(30) Priorität: 30.09.2003 DE 10345281
(71) Anmelder: B+V Industrietechnik GmbH, 20457 Hamburg (DE)
(72) Erfinder: Schnetgöke, Hanno, 72070 Tübingen (DE)
(74) Vertreter: Klickow, Hans Henning,Dr.-Ing.

(57) **Zusammenfassung**

Die Vorrichtung dient zur Schwenklagerung von drehbeweglichen Bauteilen im Bereich eines Schiffes und weist ein mit dem Bauteil verbundenes erstes Lagerelement sowie mindestens ein mit einer Halterungsstruktur verbundenes Lagerelement auf. Die Lagerelemente sind gleitend gegeneinander geführt. In das Material mindestens des zweiten Lagerelementes ist ein Schmiermittel eingebettet und das zweite Lagerelement ist aus einem Kunststoff ausgebildet. Mindestens eine Lauffläche des ersten Lagerelementes ist mit einer Oberflächenbeschichtung versehen.

## Beschreibung

Die Erfindung betrifft eine Vorrichtung zur Schwenklagerung von drehbeweglichen Bauteilen, die ein mit dem Bauteil verbundenes erstes Lagerelement sowie mindestens ein mit einer Halterungsstruktur verbundenes zweites Lagerelement aufweist und bei der die Lagerelemente gleitend gegeneinander geführt sind.

Derartige Lagerelemente werden typischerweise zur Lagerung von Wellen oder Schwenksäulen verwendet. Bei einer bekannten Lagerung für Schwenksäulen von Flossenstabilisatoren besteht das erste Lagerelement aus einer Bronze-Stahl-Paarung, das zweite Lagerelement besteht aus einer Bronze-Grauguß-Paarung. Die Lagerelemente werden mit einem Druck von etwa 0,8 bar mit Mineralöl geschmiert. Mit einer derartigen Materialpaarung läßt sich ein Reibungskoeffizient im geschmierten zustand von etwa 0,05 erreichen.

Aufgabe der vorliegenden Erfindung ist es, eine Vorrichtung der einleitend genannten Art derart zu verbessern, daß bei einfacher Konstruktion ein geringer Reibungskoeffizient erzielt wird.

Diese Aufgabe wird erfindungsgemäß dadurch gelöst, daß in das Material mindestens des zweiten Lagerelementes ein Schmiermittel eingebettet ist und daß das zweite Lagerelemente aus einem Kunststoff ausgebildet ist sowie daß mindestens eine Lauffläche des ersten Lagerelementes mit einer Oberflächenbeschichtung versehen ist.

Durch die vorgeschlagene Materialpaarung wird eine separate Druckschmierung vermieden und es kann ohne separate Druckschmierung ein geringer Reibungskoeffizient erreicht werden. Darüber hinaus weist die vorgeschlagene Materialpaarung eine hohe Dauerbeständigkeit auf, so daß eine lange Einsatzfähigkeit unterstützt wird.

Eine optimale Bereitstellung von Schmier- und Gleiteigenschaften wird dadurch erreicht, daß als Schmiermittel MoS2 sowie PTFE verwendet ist.

Eine typische Anwendung besteht darin, daß das drehbewegliche Bauteil als Element eines Flossenstabilisators ausgebildet ist.

Insbesondere ist daran gedacht, daß das drehbewegliche Bauteil als Schwenksäule eines Flossenstabilisators ausgebildet ist.

Insbesondere erfolgt eine funktionsgerechte Lagerung von Flossenstabilisatoren dadurch, daß die Schwenksäule im wesentlichen mit einer Längsachse in vertikaler Richtung angeordnet ist.

Eine kippsichere Säulenlagerung wird dadurch erreicht, daß die Schwenksäule (1) an mindestens zwei räumlich voneinander beabstandeten Positionen gelagert ist.

Eine vorteilhafte Materialauswahl besteht darin, daß das zweite Lagerelement aus einem textilverstärkten Kunststoff ausgebildet ist.

Hochfeste und zugleich ausreichend nachgiebige Materialeigenschaften werden dadurch bereitgestellt, daß das zweite Lagerelement aus einem Orkot TXM Marine ausgebildet ist.

Zur Bereitstellung optimaler Materialpaarungen trägt es darüber hinaus bei, daß das erste Lagerelement mindestens bereichsweise mit einem Hochgeschwindigkeitsflammspritzverfahren beschichtet ist.

Insbesondere ist daran gedacht, daß das erste Lagerelement mit dem HVOF-H²-Verfahren beschichtet ist.

Günstige Verschleißeigenschaften können dadurch erreicht werden, daß in der Oberflächenbeschichtung des ersten Lagerelementes Anteile von Wolframcarbid enthalten sind.

Ebenfalls trägt es zur verschleißfestigkeit bei, daß in der Oberflächenbeschichtung des ersten Lagerelementes Anteile von Cobalt enthalten sind.

Eine weitere vorteilhafte Materialkomponente ist dadurch definiert, daß in der Oberflächenbeschichtung des ersten Lagerelementes Anteile von Chrom enthalten sind.

Eine Kombination positiver Materialeigenschaften wird dadurch bereitgestellt, daß das erste Lagerelement mit einer Beschichtung versehen ist, die etwa 86 % Wolframcarbid, etwa 10 % Cobalt sowie etwa 4 % Chrom aufweist.

Eine zusätzliche Oberflächenglättung kann dadurch erreicht werden, daß die Oberflächenbeschichtung des ersten Lagerelementes versiegelt ist.

Als besonders vorteilhaft erweist es sich, daß als versiegelung ein Material von Titan Präcis verwendet ist.

Eine widerstandsfähige Verbindung der Materialschichten miteinander wird dadurch unterstützt, daß die Oberflächenbeschichtung des ersten Lagerelementes vor ihrer versiegelung aktiviert ist.

Eine besonders hohe Haftungswirkung kann dadurch erreicht werden, daß die Oberflächenbeschichtung mit einer alkoholbasierten Substanz aktiviert ist.

Für eine radiale Lagerung erweist es sich als vorteilhaft, daß das zweite Lagerelement buchsenförmig ausgebildet ist.

Hinsichtlich einer axialen Lagerung ist insbesondere daran gedacht, daß zur axialen Lagerung mindestens ein ringförmiges Gegenlager verwendet ist, das aus dem gleichen Material wie das zweite Lagerelement ausgebildet ist.

Eine beidseitige axiale Festlegung wird dadurch erreicht, daß zur axialen Lagerung mindestens zwei ringförmige Gegenlager verwendet sind, die gegenüberliegend zu einander abgewandten axialen Gleitflächen des Bauteiles angeordnet sind.

In den zeichnungen sind Ausführungsbeispiele der Erfindung schematisch dargestellt. Es zeigen:
- Fig. 1: eine Skizze zur Veranschaulichung der Lagerung einer Schwenksäule eines Flossenstabilisators und
- Fig. 2: eine gegenüber Fig. 1 abgewandelte Darstellung zur Veranschaulichung des Prinzips des Zusammenwirkens der Lagerelemente.

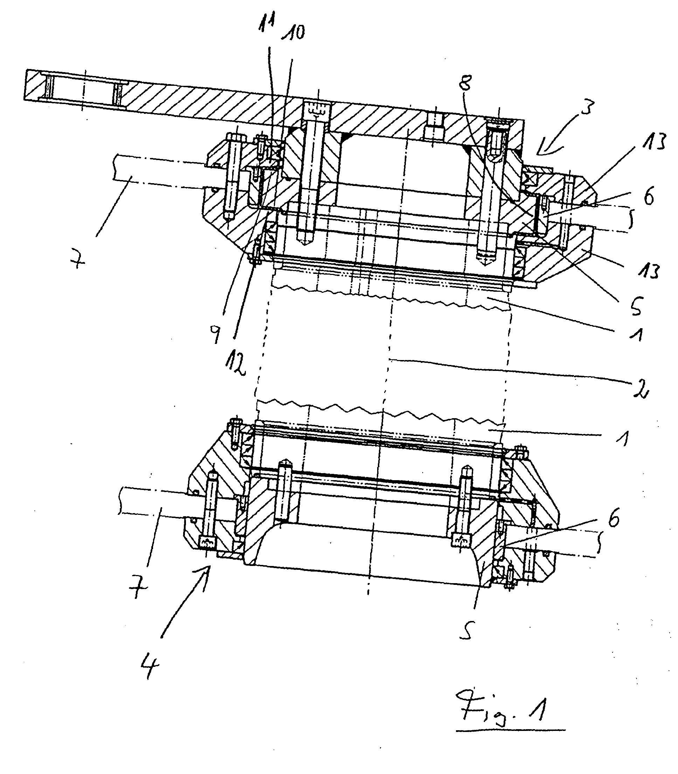

Fig. 1 zeigt eine typische Anordnung zur veranschaulichung der Lagerung einer Schwenksäule (1) eines Flossenstabilisators an Bord eines Schiffes. Die Schwenksäule (1) ist mit einer Längsachse (2) im wesentlichen in vertikaler Richtung angeordnet. Die Schwenksäule (1) wird von zwei Lagern (3, 4) schwenkbar geführt, die jeweils aus einem ersten Lagerelement (5) und einem zweiten Lagerelement (6) ausgebildet sind. Das jeweilige erste Lagerelement (5) ist mit der Schwenksäule (1) verbunden, das zweite Lagerelement (6) wird von einer Halterungsstruktur (7) des Schiffes positioniert. Das erste Lagerelement (5) ist gleitfähig gegenüber dem zweiten Lagerelement (6) geführt.

Zur Bereitstellung einer zusätzlichen Lagerung der Schwenksäule (1) in Richtung der Längsachse (2) weist das in vertikaler Richtung oben angeordnete erste Lagerelement (5) zusätzlich zu einer in radialer Richtung außen liegenden radial Gleitfläche (8) in Richtung der Längsachse (2) orientierte und einander abgewandt angeordnete axiale Gleitflächen (9, 10) auf. Die axialen Gleitflächen (9, 10) wirken mit Gegenlagern (11, 12) zusammen, die von einer Lagerschale (11) bereitgestellt werden, die auch das zweite Lagerelement (6) fixiert und mit der Halterungsstruktur (7) verbindet.

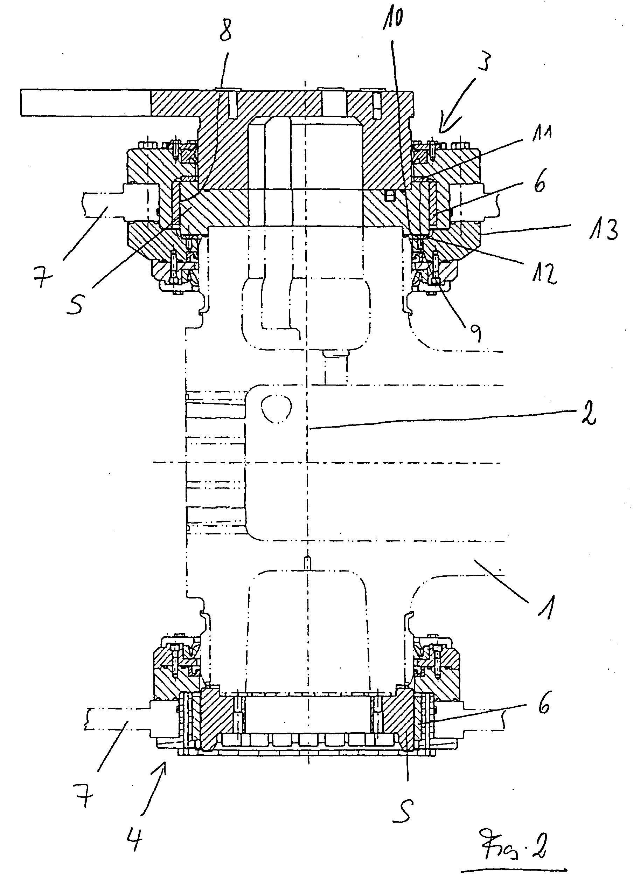

Fig. 2 verdeutlicht im Detail die Verwendung von zweiten Lagerelementen (6), die aus einem Kunststoff ausgebildet sind, in den ein Schmiermittel eingebettet ist. Als eingebettetes Schmiermittel wird sowohl MoS2 als auch PTFE verwendet. Das zweite Lagerelement (6) besteht aus einem textilverstärktem Kunststoff, insbesondere ist an die Verwendung von Orkot TXM Marine gedacht. Zur weiteren Verminderung des Reibungskoeffizienten ist die radiale Gleitfläche des ersten Lagerelementes (5) in einem Hochgeschwindigkeitsflammspritzverfahren beschichtet. Typischerweise wird hierzu das verfahren HVOF-H² verwendet. Eine besonders vorteilhafte Beschichtung enthält 86 % Wolframcarbid, 10 % Cobalt und 4 % Chrom. Eine Dauerbeständigkeit wird durch eine Versiegelung dieser Beschichtung erreicht. Bewährt hat sich insbesondere der Versiegler von Titan Präcis Metallurgie.

Durch die Kombination der oben vorgeschlagenen Materialauswahlen läßt sich bei einer Flächenbelastung von 20 N/mm² und einer Gleitgeschwindigkeit von 0,1 m/sec ein mittlerer Reibungskoeffizient von 0,038 ohne Verwendung zusätzlicher Schmiermittel erreicht.

Eine gleiche Materialauswahl, wie vorstehend für das zweite Lagerelement (6) beschrieben, kann auch für die Gegenlager (11, 12) erfolgen, die die axiale Lagerung durchführen.

Im dargestellten Ausführungsbeispiel ist das zweite Lagerelement (6) als eine von der Lagerschale fixierte Buchse ausgebildet. Die Gegenlager (11, 12) sind ringförmig ausgebildet und werden ebenfalls von der Lagerschale (13) positioniert und fixiert.

Zur vermeidung einer verspannung in der Lagerung durch eine geometrische Überbestimmung erfolgt nur im Bereich des Lagers (3) sowohl eine axiale als auch eine radiale Festlegung.

Der vorgeschlagene Werkstoff Orkot TXM Marine besteht zu etwa 43 % aus einem Polyestergewebe, das mit ebenfalls etwa 43 % Polyesterharz gebunden ist. Es erfolgt eine Auffüllung von etwa 7 % mit MoS2 als Schmiermittelanteil und mit ebenfalls etwa 7 % PTFE als Gleitmaterialanteil.

Das HVOF-Verfahren ist ein Hochgeschwindigkeitsbeschichtungsverfahren, bei dem die Verbrennung des Zündgemisches in einer Brennkammer stattfindet. Das Zündgemisch setzt sich aus reinem Sauerstoff und Wasserstoff zusammen. Durch den enormen Verbrennungsdruck von 0,6-1,1 Mpa, einer Gasexpansion des Zündgemisches und durch konvergierende/divergierende Lavaldrüsen erreicht das Gas-Partikelgemisch Geschwindigkeiten von 3000 m/s am Düsenaustritt. Das Beschichtungsmaterial wird dabei in einem Pulverförderer unter Vakuum und Stickstoffatmosphäre gegenüber oxidierenden Einflüssen abgeschirmt.

Die Beschichtungspartikel treffen mit einer Geschwindigkeit von 2500 m/s auf den Grundwerkstoff auf und verschmieden sich teilweise mit diesem zu einer festhaftenden, dichten Schicht. Die Schicht ist umwandlungs- und oxidarm. Auf Grund der hohen kinetischen Energie des Verfahrens zerplatzt das Beschichtungsmaterial nicht an der Werkstückoberfläche. Die hohe Energie führt zu Verformungsmechanismen, die eine verklammerung der Beschichtung zur aufgerauhten Oberfläche des Grundwerkstoffes zur Folge hat. Zusätzlich werden in der Schicht durch den Aufprall (shotpeening) und durch die Verformungsbewegung Druckeigenspannungen eingebracht, die sich vorteilhaft auf das Adhäsionsund Kohäsionsverhalten der Schicht auswirken.

Vor dem Versiegeln wird die Oberfläche mit einem auf Alkoholbasis basierendem Aktivator behandelt. Der Versiegler beruht auf einer Urethanmethacryl/Di Methacrylatesterbasis. Die Versiegelung findet durch ein Tauchverfahren unter geringem Vakuum statt. Die Aushärtung des Versieglers findet unter einer chemisch physikalischen Reaktion im Ofen unter Vakuum und Temperaturen von 100° Celsius über zwölf Stunden statt. Durch diese Reaktion diffundiert der Versiegler zu zwei Dritteln in die Beschichtungsoberfläche ein.

## Patentansprüche

1. Vorrichtung zur Schwenklagerung von drehbeweglichen Bauteilen im Bereich eines Schiffes, die ein mit dem Bauteil verbundenes erstes Lagerelement sowie mindestens ein mit einer Halterungsstruktur verbundenes zweites Lagerelement aufweist und bei der die Lagerelemente gleitend gegeneinander geführt sind, **dadurch gekennzeichnet, daß** in das Material mindestens des zweiten Lagerelementes (6) ein Schmiermittel eingebettet ist und daß das zweite Lagerelement (6) aus einem Kunststoff ausgebildet ist sowie das mindestens eine Lauffläche des ersten Lagerelementes (5) mit einer Oberflächenbeschichtung versehen ist.

2. Vorrichtung nach Anspruch 1, **dadurch gekennzeichnet, daß** als Schmiermittel MoS2 sowie PTFE verwendet ist.

3. Vorrichtung nach Anspruch 1 oder 2, **dadurch gekennzeichnet, daß** das drehbewegliche Bauteil als Element eines Flossenstabilisators ausgebildet ist.

4. Vorrichtung nach Anspruch 3, **dadurch gekennzeichnet, daß** das drehbewegliche Bauteil als Schwenksäule eines Flossenstabilisators ausgebildet ist.

5. Vorrichtung nach einem der Ansprüche 1 bis 4, **dadurch gekennzeichnet, daß** die Schwenksäule (1) im wesentlichen mit einer Längsachse (2) in vertikaler Richtung angeordnet ist.

6. Vorrichtung nach einem der Ansprüche 1 bis 5, **dadurch gekennzeichnet, daß** die Schwenksäule (1) an mindestens zwei räumlich voneinander beabstandeten Positionen gelagert ist.

7. Vorrichtung nach einem der Ansprüche 1 bis 6, **dadurch gekennzeichnet, daß** das zweite Lagerelement (6) aus einem textilverstärkten Kunststoff ausgebildet ist.

8. Vorrichtung nach einem der Ansprüche 1 bis 6, **dadurch gekennzeichnet, daß** das zweite Lagerelement (6) aus einem Orkot TXM Marine ausgebildet ist.

9. Vorrichtung nach einem der Ansprüche 1 bis 8, **dadurch gekennzeichnet, daß** das erste Lagerelement (5) mindestens bereichsweise mit einem Hochgeschwindigkeitsflammspritzverfahren beschichtet ist.

10. Vorrichtung nach Anspruch 9, **dadurch gekennzeichnet, daß** das erste Lagerelement (5) mit dem HVOF-H²-Verfahren beschichtet ist.

11. Vorrichtung nach einem der Ansprüche 1 bis 10, **dadurch gekennzeichnet, daß** in der Oberflächenbeschichtung des ersten Lagerelementes (5) Anteile von Wolframcarbid enthalten sind.

12. Vorrichtung nach einem der Ansprüche 1 bis 10, **dadurch gekennzeichnet, daß** in der Oberflächenbeschichtung des ersten Lagerelementes (5) Anteile von Cobalt enthalten sind.

13. Vorrichtung nach einem der Ansprüche 1 bis 10, **dadurch gekennzeichnet, daß** in der Oberflächenbeschichtung des ersten Lagerelementes (5) Anteile von Chrom enthalten sind.

14. Vorrichtung nach einem der Ansprüche 1 bis 13, **dadurch gekennzeichnet, daß** das erste Lagerelement (5) mit einer Beschichtung versehen ist, die etwa 86 % Wolframcarbid, etwa 10 % Cobalt sowie etwa 4 % Chrom aufweist.

15. Vorrichtung nach einem der Ansprüche 1 bis 14, **dadurch gekennzeichnet, daß** die Oberflächenbeschichtung des ersten Lagerelementes (5) versiegelt ist.

16. Vorrichtung nach Anspruch 15, **dadurch gekennzeichnet, daß** als versiegelung ein Material von Titan Präcis verwendet ist.

17. Vorrichtung nach einem der Ansprüche 1 bis 16, **dadurch gekennzeichnet, daß** die Oberflächenbeschichtung des ersten Lagerelementes (5) vor ihrer Versiegelung aktiviert ist.

18. Vorrichtung nach Anspruch 17, **dadurch gekennzeichnet, daß** die Oberflächenbeschichtung mit einer alkoholbasierten Substanz aktiviert ist.

19. Vorrichtung nach einem der Ansprüche 1 bis 18, **dadurch gekennzeichnet, daß** das zweite Lagerelement (6) buchsenförmig ausgebildet ist.

20. Vorrichtung nach einem der Ansprüche 1 bis 19, **dadurch gekennzeichnet, daß** zur axialen Lagerung mindestens ein ringförmiges Gegenlager (11) verwendet ist, das aus dem gleichen Material wie das zweite Lagerelement (6) ausgebildet ist.

21. Vorrichtung nach einem der Ansprüche 1 bis 19, **dadurch gekennzeichnet, daß** zur axialen Lagerung mindestens zwei ringförmige Gegenlager (11, 12) verwendet sind, die gegenüberliegend zu einander abgewandten axialen Gleitflächen (9, 10) des Bauteiles angeordnet sind.
